# DEMANDE DE BREVET EUROPEEN

(11) **EP 1 063 469 A1**
(43) Date de publication de la demande: **27.12.2000**
(21) Numéro de dépôt: 00401779.4
(22) Date de dépôt: 22.06.2000
(51) Int. Cl.: F23G 5/46, F23G 5/30, F23G 5/50, F23J 15/04

(54) **Installation de production de chaleur par combustion de combustibles provenant de la biomasse**

(30) Priorité: 22.06.1999 FR 9907940
(71) Demandeur: Ruble, Paul, 92500 Rueil-Malmaison (FR)
(72) Inventeur: Ruble, Paul, 92500 Rueil-Malmaison (FR)
(74) Mandataire: Bruder, Michel

(57) **Abrégé**

La présente invention concerne une installation de production de chaleur par combustion de combustibles provenant de la biomasse, comprenant un réacteur à lit fluidisé (1) dont la partie supérieure est reliée, par un circuit des fumées (18), à la partie supérieure d'un laveur des fumées (19), une source (5) d'un combustible exothermique à taux d'humidité variable, une source (11) d'un fluide d'appoint endothermique, des moyens (6,7;12,13) pour introduire des débits variables de combustible exothermique et de fluide d'appoint endothermique dans le lit fluidisé (4) du réacteur (1) afin de maintenir constante la température du lit fluidisé (4) avec une teneur en oxygène dans les fumées la plus faible possible.

Cette installation est caractérisée en ce qu'elle comprend un circuit de transfert d'énergie calorifique à haute température ou haut niveau (A) comprenant deux échangeurs de chaleur branchés en série, à savoir un échangeur de chaleur interne (14) logé dans la partie supérieure du réacteur (1) et un échangeur de chaleur externe (17) logé dans le circuit des fumées (18), et un circuit de transfert d'énergie calorifique à basse température ou bas niveau (B) branché entre la partie inférieure (26) d'un laveur (19) et une rampe de pulvérisation d'eau (25) située dans la partie supérieure du laveur (19) (Figure 1).

## Description

La présente invention concerne une installation de production de chaleur par combustion de combustibles provenant de la biomasse.

L'évolution de la réglementation sur la limitation des rejets solides et des polluants gazeux, d'une part, et l'intérêt économique engendré par le remplacement de combustibles nobles, tels que le charbon, le fioul, le gaz, par des combustibles de récupération pour la production d'énergie, d'autre part, ont conduit à s'intéresser à la valorisation de divers déchets combustibles à faible pouvoir calorifique. Parmi ces déchets récupérables figurent les combustibles provenant de la biomasse ou biocombustible, tels que des copeaux de bois non souillés, des cosses de fruit, d'amandes, des fibres ligneuses, la paille, la bagasse, etc... Les biocombustibles présentent des propriétés très intéressantes du fait de leur coût de production faible ou même éventuellement nul et de leur caractère de renouvelabilité. Toutefois, l'utilisation de ces biocombustibles pour la production d'énergie calorifique est souvent limitée par la variabilité de leur taux d'humidité qui dépend fortement non seulement du niveau de leur évolution mais encore de leur période de ramassage, des conditions atmosphériques lors de cette opération et des conditions de stockage jusqu'à leur reprise sur stock avant leur combustion. Cette forte variation d'humidité conduit à tolérer des excès d'air importants dans le cas de combustibles secs ou à injecter un combustible d'appoint (gaz, fioul ou charbon) dans le cas de combustibles très humides, ceci afin de maîtriser la combustion dans le foyer.

Pour résoudre ce problème on a déjà envisagé, ainsi qu'il est décrit dans le brevet FR-A-2.765.670 des demandeurs, de dimensionner l'unité de combustion, constituée par un réacteur à lit fluidisé, pour le biocombustible le plus humide permettant une combustion autothermique, c'est-à-dire assurant le maintien de la température de combustion à une valeur de consigne, et de compenser la variation d'humidité de ce biocombustible par l'injection, dans le lit fluidisé, d'une quantité variable d'un fluide d'appoint endothermique, tel que de l'eau ou un combustible ayant un pouvoir calorifique inférieur à celui correspondant à l'autothermicité de l'unité de combustion. Le fluide d'appoint endothermique peut être aussi constitué par l'effluent de lavage liquide recueilli à la partie inférieure d'un appareil de lavage des fumées sortant du réacteur à lit fluidisé. L'installation précitée permet de produire une énergie calorifique à un seul niveau de température. Or, certaines applications industrielles, telles que, par exemple, la culture sous serre, peuvent requérir différents niveaux d'énergie, ce qui impose de prévoir des dispositifs complémentaires pour adapter l'énergie produite au niveau de température souhaité, d'où un accroissement sensible de la complexité et par conséquent du coût de l'installation de production de chaleur.

Le brevet US-A-3.726.239 décrit un système de combustion comportant, à la sortie d'une chaudière, un laveur-condenseur des gaz de combustion alimenté en eau à sa partie supérieure.

La présente invention vise à procurer une installation de production de chaleur tenant compte automatiquement des variations d'humidité du biocombustible de base tout en garantissant à la fois une puissance totale fournie constante et une maîtrise de la répartition de cette puissance entre une énergie à température élevée (énergie haut niveau) et de l'énergie à température plus basse (énergie bas niveau), et ce au moindre coût de l'installation.

A cet effet, cette installation de production de chaleur par combustion de combustibles provenant de la biomasse, comprenant un réacteur à lit fluidisé dont la partie supérieure est reliée, par un circuit des fumées, à la partie supérieure d'un laveur des fumées, une source d'un combustible exothermique à taux d'humidité variable, une source d'un fluide d'appoint endothermique, des moyens pour introduire des débits variables de combustible exothermique et de fluide d'appoint endothermique dans le lit fluidisé du réacteur afin de maintenir constante la température du lit fluidisé avec une teneur en oxygène dans les fumées la plus faible possible, caractérisée en ce qu'elle comprend un circuit de transfert d'énergie calorifique à haute température ou haut niveau pouvant être constitué d'un ou plusieurs échangeurs de chaleur branchés en série, à savoir un échangeur de chaleur interne logé dans la partie supérieure du réacteur et éventuellement un ou plusieurs échangeurs de chaleur externes logés dans le circuit des fumées, et un circuit de transfert d'énergie calorifique à basse température ou bas niveau branché entre la partie inférieure du laveur et une rampe de pulvérisation d'eau située dans la partie supérieure du laveur, fonctionnant également en condenseur des fumées, de manière à utiliser, en tant que fluide caloporteur dans le circuit de transfert d'énergie calorifique bas niveau, l'eau de lavage provenant de la rampe de distribution supérieure et l'eau de condensation des fumées, de manière à fournir une production d'énergie totale constante avec une variation de la répartition de cette énergie en énergie à haut niveau et en énergie à bas niveau.

On décrira ci-après, à titre d'exemple non limitatif, une forme d'exécution de la présente invention, en référence aux dessins annexés sur lesquels :

La figure 1 est un schéma d'une installation de production de chaleur à réacteur à lit fluidisé et laveur des fumées suivant la présente invention.

La figure 2 est un schéma partiel d'une variante d'exécution de l'installation représentée sur la figure 1.

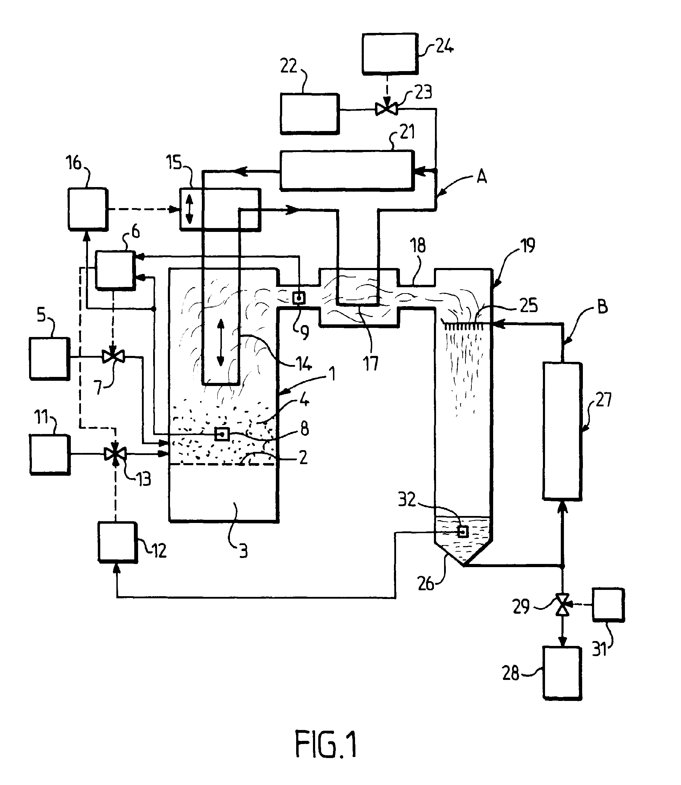

L'installation de production de chaleur qui est représentée sur la figure 1 comporte un réacteur à lit fluidisé 1 dans la partie inférieure duquel s'étend une grille de fluidisation horizontale 2 délimitant en dessous d'elle un compartiment 3 d'entrée d'air de fluidisation. L'air de fluidisation est fourni, de la manière habituelle, par un circuit d'alimentation en air sous pression comportant un ventilateur qui débite également de l'air dans la chambre de combustion du réacteur 1 qui se trouve au-dessus de la grille de fluidisation 2. En fonctionnement, la grille supporte un lit fluidisé 4 qui est constitué de particules solides, par exemple de sable, qui sont soulevées de la grille 2 lors du passage de l'air de fluidisation vers le haut, à travers les ouvertures de la grille 2.

Deux sources de combustibles différents sont prévues pour alimenter le réacteur 1, au niveau de son lit fluidisé 4. Une première source de combustible exothermique 5 fournit au réacteur 1 un combustible de la biomasse à taux d'humidité variable. Par combustible exothermique on entend un combustible ayant un pouvoir calorifique supérieur à celui correspondant à l'autothermicité, c'est-à-dire au maintien de la température de combustion dans le réacteur 1 à une valeur de consigne d'au moins 850°C. Le débit de ce combustible est déterminé par un régulateur 6 qui agit sur un dispositif d'alimentation à débit variable 7 monté sur un conduit s'étendant entre la source 5 et le réacteur 1. Le régulateur 6 est relié à un capteur de température 8 détectant la température du lit fluidisé 4, c'est-à-dire la température de combustion, et il est également relié à un autre capteur 9 placé dans la partie supérieure du réacteur 1 ou dans la sortie de celui-ci pour détecter la teneur en oxygène des fumées.

Une seconde source 11 fournit au réacteur 1 un fluide d'appoint endothermique qui peut être constitué par un combustible à faible pouvoir calorifique ou de l'eau. Par combustible endothermique on entend un combustible ayant un pouvoir calorifique inférieur à celui correspondant à l'autothermicité du réacteur 1. Le combustible endothermique peut être notamment un produit liquide ou solide de fine granulométrie en suspension dans un liquide qui n'est pas en mesure de brûler seul sans l'aide d'un combustible de pouvoir calorifique supérieur. Le débit du fluide d'appoint endothermique est déterminé par un régulateur 12 qui agit sur un dispositif d'alimentation à débit variable 13 monté sur un conduit s'étendant entre la source 11 et le réacteur 1.

Dans la partie supérieure du réacteur 1 est logé un échangeur de chaleur 14 qui est fixé à un support mobile 15, situé à l'extérieur du réacteur 1, de manière à pouvoir être déplacé verticalement. Le réglage de la position verticale de l'échangeur de chaleur mobile interne 14 est assuré par un régulateur 16 auquel est connecté le capteur 8 de la température de combustion. L'échangeur mobile interne 14 est branché dans un circuit de transfert d'énergie calorifique à haute température ou d'énergie haut niveau A. Par l'exemple représenté il est connecté en série avec un échangeur fixe externe 17 logé dans le circuit d'évacuation des fumées 18 s'étendant entre la partie supérieure du réacteur 1 et celle d'un laveur-condenseur des fumées 19. Dans le circuit de transfert d'énergie calorifique haut niveau A dans lequel circule un fluide caloporteur mis en mouvement par une pompe non représentée, est branché en série un dispositif 21 utilisateur de cette énergie haut niveau. Sur le dispositif utilisateur d'énergie haut niveau 21 est branché en dérivation un moyen de stockage 22 de cette énergie qui est relié au circuit A par une électrovanne 23 pilotée par un dispositif de commande 24.

Le laveur-condenseur 19 est prévu pour récupérer l'énergie calorifique des fumées de combustion qui pénètrent dans sa partie supérieure et pour retenir les poussières qu'elles contiennent, avant de les rejeter dans l'atmosphère. Le laveur-condenseur 19 est constitué par une colonne verticale comportant une ou plusieurs rampes de pulvérisation d'eau 25 réparties à différents niveaux sur sa hauteur et il recueille, dans son fond 26, de l'eau qui est constituée de l'eau de lavage provenant de la rampe de distribution 25 et de l'eau de condensation des fumées. L'eau recueillie à la partie inférieure du laveur-condenseur 19 est à une température relativement basse, par exemple de l'ordre de 30 à 50°C, et elle est remise en circulation, par une pompe non représentée, dans un circuit de transfert d'énergie calorifique à basse température ou d'énergie bas niveau B pour alimenter un dispositif 27 utilisateur de cette énergie. Sur le circuit de transfert d'énergie bas niveau B est branché en dérivation un moyen de stockage 28 de cette énergie, par l'intermédiaire d'une électrovanne 29 pilotée par un dispositif de commande 31.

Un capteur de température 32 est disposé dans la partie inférieure du laveur-condenseur 19, pour détecter la température de l'eau à l'entrée dans le circuit B, et il est connecté au régulateur 12 de manière à commander le débit de fluide d'appoint endothermique fourni par la source 11.

On décrira maintenant le fonctionnement de l'installation suivant la présente invention qui a été décrite précédemment.

A la différence d'un réacteur à lit fluidisé classique comportant un échangeur interne mobile tel que l'échangeur 14 qui est utilisé seul pour maintenir constante la température du lit fluidisé 4, on utilise à cet effet, dans l'installation représentée sur la figure 1, conjointement le réglage de la position verticale de l'échangeur interne mobile 14 et l'injection, dans le lit fluidisé 4, du fluide d'appoint endothermique fourni par la source 11. L'échangeur de chaleur interne mobile 14 est dimensionné de telle façon que dans sa position la plus basse, la température du lit fluidisé 4 reste au moins égale à 850°C avec la combustion d'un mélange du combustible exothermique fourni par la source 5 et du fluide d'appoint endothermique fourni par la source 11 correspondant à un combustible autothermique, c'est-à-dire maintenant la température de combustion à sa valeur de consigne. Les débits respectifs du combustible exothermique et du fluide d'appoint endothermique sont optimisés de manière à maintenir constante la température du lit 4 avec une teneur en oxygène dans les fumées la plus faible possible, compatible avec une absence d'imbrûlés gazeux dans les fumées.

On décrira maintenant, d'une manière plus précise, le fonctionnement de l'installation suivant la présente invention dans le cas de différents besoins en énergie.

### 1°) Cas où le besoin total en énergie est constant.

Si le besoin du dispositif 21 utilisateur d'énergie haut niveau vient à diminuer et celui du dispositif 27 utilisateur d'énergie bas niveau vient à augmenter corrélativement, la baisse de la demande en énergie haut niveau se traduit par une action sur le régulateur 16 qui provoque alors une montée de l'échangeur mobile 14. Cette montée de l'échangeur interne mobile 14 aurait pour conséquence de faire monter la température de combustion du lit fluidisé 4. Toutefois, cette tendance à l'augmentation de la température de combustion est annulée par le régulateur 12 qui augmente alors le débit de fluide d'appoint endothermique, ce qui contrebalance l'augmentation de température et provoque additionnellement une élévation de la teneur en eau des fumées et par conséquent une augmentation de la température de saturation de ces fumées. Le régulateur 6 agit sur la proportion entre les débits du combustible exothermique et du fluide d'appoint endothermique pour corriger les effets éventuels des variations précédentes sur la température du lit, pour minimiser la teneur en oxygène des fumées.

Inversement, si le besoin en énergie haut niveau vient à augmenter alors que le besoin en énergie bas niveau diminue corrélativement, le régulateur 16 provoque la descente de l'échangeur interne mobile 14, le régulateur 12 provoque une diminution du débit de fluide d'appoint endothermique et le régulateur 6 corrige les effets précédents de façon à minimiser l'excès d'air et à maintenir la température du lit à sa valeur de consigne.

L'installation suivant l'invention permet également de corriger automatiquement les variations du taux d'humidité du combustible exothermique fourni par la source 5. Si l'humidité du combustible exothermique augmente, la température de combustion a tendance à diminuer, l'humidité des fumées va augmenter et le régulateur 16 a tendance à faire descendre l'échangeur interne mobile 14 pour maintenir constante la production d'énergie haut niveau. Dans le même temps, le régulateur 12 diminue le débit de fluide d'appoint endothermique pour garder l'énergie bas niveau constante car la température de saturation des fumées a tendance à augmenter du fait de l'augmentation de la teneur en eau des fumées. Cette réduction du débit de fluide d'appoint endothermique provoque une augmentation de la température de combustion qui compense les effets de l'augmentation de l'humidité du combustible exothermique. Les échanges thermiques au niveau de l'échangeur mobile 14 vont de ce fait devenir plus importants et le régulateur 16 provoque la remontée de l'échangeur mobile 14 pour maintenir l'énergie haut niveau constante. Le régulateur 6 optimise toujours la proportion entre les débits du combustible exothermique et du fluide d'appoint endothermique afin de minimiser la teneur en oxygène des fumées.

### 2°) Une seule forme d'énergie est imposée, l'autre étant stockée pour une valorisation ultérieure.

On supposera que l'installation doit fournir uniquement de l'énergie haut niveau (circuit A), l'énergie bas niveau étant stockée pour être valorisée ultérieurement, par exemple sous forme d'eau chaude dans un bac calorifugé. Dans ce cas, seul le régulateur 6 est actif et il agit sur les deux combustibles ; par contre le régulateur 12 ne l'est pas. Si le besoin en énergie haut niveau dans le circuit A vient à varier, le régulateur 16 commande la descente ou la montée de l'échangeur interne mobile 14 suivant que la demande d'énergie haut niveau augmente ou baisse respectivement. La température de combustion va donc varier corrélativement. Le régulateur 6 qui agit sur les dispositifs d'alimentation 7 en combustible exothermique et 13 en fluide d'appoint endothermique, détermine la proportion relative de leurs débits de façon à rétablir la température de consigne tout en minimisant la teneur en oxygène des fumées. Cette action a pour conséquence globale de faire varier la teneur en eau des fumées, donc la température de saturation de ces dernières, ce qui entraîne une modification de la disponibilité en énergie bas niveau. L'énergie bas niveau excédentaire ou non utilisée est alors stockée dans le moyen de stockage 28, par suite de l'ouverture de l'électrovanne 29 actionnée par son dispositif de commande 31.

Si seule l'énergie bas niveau est requise, l'énergie haut niveau non utilisée par le dispositif 21 est stockée dans le moyen 22, par suite de l'ouverture de l'électrovanne 23 actionnée par son dispositif de commande 24. Dans ce cas, les régulateurs 6 et 12 sont actifs, le régulateur 6 réglant la proportion des débits de combustible exothermique et du fluide d'appoint endothermique pour minimiser l'excès d'air. Par ailleurs le régulateur 16 agit sur la position de l'échangeur mobile 14 pour maintenir la température du lit fluidisé à sa valeur de consigne.

Si le besoin en énergie bas niveau vient à diminuer, ceci veut dire que, comme le débit d'eau dans le circuit de transfert d'énergie à bas niveau B reste constant, la température de cette eau doit être plus faible, ce qui correspond à une température de saturation des fumées plus faible et, toutes choses étant égales par ailleurs, à une teneur en eau des fumées plus basse. Le régulateur 12 intervient alors de manière à réduire le débit de fluide d'appoint endothermique. Le régulateur 6 agit principalement sur le combustible exothermique provenant de la source 5, tout en respectant la consigne de la teneur en oxygène minimale des fumées, ce qui va se traduire par une augmentation de la température du lit fluidisé. Cette augmentation est alors compensée par le régulateur 16 qui provoque une descente de l'échangeur mobile 14 et il en résulte une disponibilité en énergie haut niveau supérieure qui est stockée.

Inversement, si le besoin en énergie bas niveau vient à augmenter, le régulateur 12 augmente le débit de fluide d'appoint endothermique pour élever la teneur en eau des fumées afin que la température de saturation de ces dernières soit plus élevée, de même que la température de l'eau dans le circuit de transfert d'énergie bas niveau B. Le régulateur 6 agit principalement sur le débit de combustible exothermique de la source 5 pour respecter la teneur en oxygène des fumées. La température du lit fluidisé qui a tendance alors à diminuer, est maintenue constante par suite d'une montée de l'échangeur interne mobile 14 provoquée par le régulateur 16.

### 3°) Une seule forme d'énergie est utilisée totalement, l'autre étant utilisée partiellement.

Ce cas peut se rencontrer dans une unité de production qui utilise l'énergie haut niveau pour la fabrication ou le conditionnement de ses produits et l'énergie bas niveau pour le chauffage de ses locaux ou ses besoins sanitaires. Dans ce cas les besoins en énergie bas niveau varient suivant le moment de la journée ou suivant la saison, alors que les besoins en énergie haut niveau sont constants. Comme précédemment, l'énergie excédentaire apparaissant dans le circuit de transfert d'énergie haut niveau A ou bas niveau B est dérivée vers les moyens de stockage respectifs 22,28.

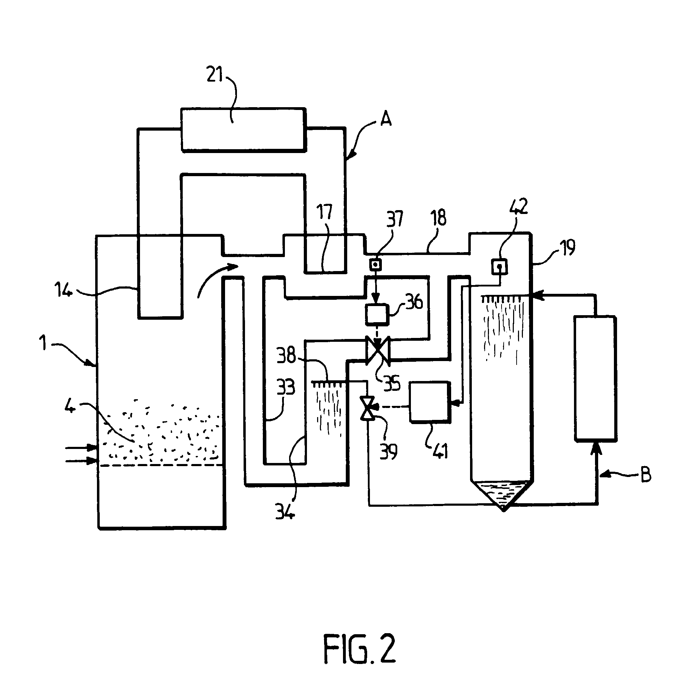

On décrira maintenant, en se référant à la figure 2, une variante d'exécution de l'installation suivant la présente invention, variante dans laquelle l'échangeur interne 14 est monté fixe dans le réacteur 1. Dans cette variante, un circuit des fumées secondaire 33 est branché en dérivation sur le circuit des fumées principal 18 dans lequel se trouve l'échangeur externe fixe 17. Dans le circuit secondaire 33 se trouvent un laveur sans condensation 34 et une vanne 35 de sortie des fumées commandée par un régulateur 36. Ce régulateur 36 est connecté à un capteur de température 37 disposé dans le circuit des fumées principal 18, du côté sortie de l'échangeur de chaleur externe 17. Le laveur sans condensation 34 comporte une ou plusieurs rampes de pulvérisation d'eau 38 qui sont reliées, par une canalisation sur laquelle est branchée une électrovanne 39, à la partie inférieure du laveur-condenseur 19. L'électrovanne 39 est commandée par un régulateur 41 qui est connecté à un capteur de température 42 situé dans la partie supérieure du laveur-condenseur 19.

Lorsque l'installation représentée sur la figure 2 est en fonctionnement, si le besoin en énergie haut niveau du dispositif utilisateur 21 vient à varier, la température des fumées à la sortie de l'échangeur externe 17, qui est de l'ordre de 300 à 400°C, varie. Pour compenser cette variation de la température des fumées à la sortie de l'échangeur externe 17, le régulateur 36 qui est commandé par le capteur 37 détectant la température de ces fumées, agit sur la vanne 35 de dérivation des fumées pour que la température de celles-ci revienne à sa valeur de consigne.

Plus particulièrement, si le besoin en énergie haut niveau vient à diminuer, le régulateur 36 agit sur la vanne de dérivation 35 de manière à ouvrir davantage cette vanne pour augmenter le débit des fumées dans le circuit secondaire 33. Il en résulte une réduction du débit des fumées dans le circuit principal 18 et une baisse de la température à la sortie de l'échangeur de chaleur externe 17. Par ailleurs le débit accru des fumées à travers le circuit secondaire 33 se traduirait par une augmentation de la température des fumées à l'entrée du laveur-condenseur 19, en particulier si le débit d'eau injectée dans le laveur sans condensation 34 restait constant. Par conséquent, pour maintenir constante la température des fumées à l'entrée du laveur-condenseur 19, il est donc indispensable d'augmenter le débit d'eau injecté dans le laveur sans condensation 34, ce qui est réalisé par le régulateur 41. Il en résulte une augmentation de la teneur en vapeur d'eau des fumées, et une augmentation corrélative de la température de saturation de ces dernières et une quantité d'énergie bas niveau plus importante.

Si le besoin en énergie haut niveau vient à augmenter, la température des fumées à la sortie de l'échangeur externe 17 a alors tendance à diminuer. Cette diminution de température, relevée par le capteur 37, amène le régulateur 36 à fermer partiellement la vanne de dérivation des fumées 35. Le débit de fumée passant dans le circuit en dérivation 33 et le laveur sans condensation 34 étant plus faible, la température des fumées à l'entrée du laveur-condenseur 19 a tendance à diminuer. Pour maintenir cette valeur constante, le régulateur 41 réduit, en agissant sur l'électrovanne 39, le débit d'eau injecté dans le laveur sans condensation 34. Le laveur-condenseur 19 reçoit alors des fumées dont la teneur en eau est plus faible et dont la température de saturation est par conséquent plus basse. Il en résulte qu'une quantité d'énergie bas niveau plus faible est produite.

Dans l'installation représentée sur la figure 2, l'échangeur interne 14 pourrait être aussi monté mobile verticalement, comme dans le cas de l'installation représentée sur la figure 1.

## Revendications

1. Installation de production de chaleur par combustion de combustibles provenant de la biomasse, comprenant un réacteur à lit fluidisé (1) dont la partie supérieure est reliée, par un circuit des fumées (18), à la partie supérieure d'un laveur des fumées (19), une source (5) d'un combustible exothermique à taux d'humidité variable, une source (11) d'un fluide d'appoint endothermique, des moyens (6,7;12,13) pour introduire des débits variables de combustible exothermique et de fluide d'appoint endothermique dans le lit fluidisé (4) du réacteur (1) afin de maintenir constante la température du lit fluidisé (4) avec une teneur en oxygène dans les fumées la plus faible possible, caractérisée en ce qu'elle comprend un circuit de transfert d'énergie calorifique à haute température ou haut niveau (A) comprenant deux échangeurs de chaleur branchés en série, à savoir un échangeur de chaleur interne (14) logé dans la partie supérieure du réacteur (1) et un échangeur de chaleur externe (17) logé dans le circuit des fumées (18), et un circuit de transfert d'énergie calorifique à basse température ou bas niveau (B) branché entre la partie inférieure (26) du laveur (19) et une rampe de pulvérisation d'eau (25) située dans la partie supérieure du laveur (19), fonctionnant également en condenseur des fumées, de manière à utiliser, en tant que fluide caloporteur dans le circuit de transfert d'énergie calorifique bas niveau (B), l'eau de lavage provenant de la rampe de distribution supérieure (25) et l'eau de condensation des fumées, de manière à fournir une production d'énergie totale constante avec une variation de la répartition de cette énergie en énergie à haut niveau et en énergie à bas niveau.

2. Installation suivant la revendication 1 caractérisée en ce qu'elle comprend un moyen (22) de stockage de l'énergie haut niveau qui est relié au circuit de transfert d'énergie calorifique haut niveau (A) par une première électrovanne (23) pilotée par un dispositif de commande (24) .

3. Installation suivant l'une quelconque des revendications 1 et 2 caractérisée en ce qu'elle comprend un moyen (28) de stockage de l'énergie bas niveau qui est branché en dérivation sur le circuit de transfert d'énergie bas niveau (B) par l'intermédiaire d'une seconde électrovanne (29) pilotée par un dispositif de commande (31) .

4. Installation suivant l'une des revendications 1 à 3 caractérisée en ce qu'elle comprend un premier régulateur (12) qui agit sur un premier dispositif d'alimentation à débit variable (13) monté sur un conduit s'étendant entre la source de fluide d'appoint endothermique (11) et le réacteur (1) et qui est connecté à un capteur de température (32) disposé dans la partie inférieure (26) du laveur (19) pour détecter la température de l'eau recueillie dans cette partie inférieure.

5. Installation suivant la revendication 4 caractérisée en ce qu'elle comprend un second régulateur (6) qui agit sur un second dispositif d'alimentation à débit variable (7) monté sur un conduit s'étendant entre la source de combustible exothermique (5) et le réacteur (1) et également sur le premier dispositif d'alimentation à débit variable (13), le second régulateur (6) étant connecté à un capteur de température (8) détectant la température du lit fluidisé (4) et à un capteur (9) logé dans le circuit des fumées (18) pour détecter la teneur en oxygène de ces fumées.

6. Installation suivant l'une des revendications précédentes caractérisée en ce qu'un circuit des fumées secondaire (33) est branché en dérivation sur le circuit des fumées principal (18) dans lequel se trouve l'échangeur de chaleur externe (17), dans le circuit des fumées secondaire (33) se trouvent un second laveur sans condensation (34) et une vanne (35) de sortie des fumées commandée par un troisième régulateur (36), ce régulateur 36 est connecté à un capteur de température (37) disposé dans le circuit des fumées principal (18), à la sortie de l'échangeur de chaleur externe (17), le second laveur sans condensation (34) comporte, à sa partie supérieure, une rampe de pulvérisation d'eau (38) qui est reliée, par une canalisation sur laquelle est branchée une troisième électrovanne (39), à la partie inférieure du premier laveur (19), et la troisième électrovanne (39) est commandée par un quatrième régulateur (41) qui est connecté à un capteur de température (42) situé dans la partie supérieure du premier laveur (19).

7. Installation suivant l'une quelconque des revendications précédentes caractérisée en ce que l'échangeur de chaleur interne (14) est monté fixe dans la partie supérieure du réacteur (1).

8. Installation suivant l'une quelconque des revendications 1 à 6 caractérisée en ce que l'échangeur de chaleur interne (14) est monté mobile verticalement et sa position verticale est ajustée par un cinquième régulateur (16) connecté à un capteur de température (8) détectant la température du lit fluidisé (4).
